# FASCICULE DE BREVET EUROPEEN

(11) **EP 3 853 041 B1**
(45) Date de publication et mention de la délivrance du brevet: **25.11.2026**
(21) Numéro de dépôt: 19794593.4
(22) Date de dépôt: 13.09.2019
(51) Int. Cl.: B60C 1/00, C08K 5/13

(54) **COMPOSITE DE CAOUTCHOUC COMPRENANT UN COMPOSE POLYPHENOLIQUE**
KAUTSCHUKVERBUNDWERKSTOFF MIT EINER POLYPHENOLISCHEN VERBINDUNG
RUBBER COMPOSITE COMPRISING A POLYPHENOLIC COMPOUND

(30) Priorité: 21.09.2018 FR 1858590
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: THUILLIEZ, Anne-Lise, 63040 Clermont-Ferrand Cedex 9 (FR); GAVARD-LONCHAY, Odile, 63040 Clermont-Ferrand Cedex 9 (FR)
(74) Mandataire: M.F.P. Michelin
(86) Numéro de dépôt international: PCT/FR2019/052139
(87) Numéro de publication internationale: WO 2020/058613

(56) Documents cités:
- WO-A1-2014/095585
- WO-A1-2017/081387
- CN-A- 107 652 558
- KR-A- 20140 126 489
- DATABASE WPI Week 200053, Derwent World Patents Index; AN 2000-567359, XP002791579
- DATABASE WPI Week 201356, Derwent World Patents Index; AN 2013-B52391, XP002791580

## Description

### Domaine technique de l'invention

La présente invention est relative aux composites de caoutchouc à base d'élastomères, ainsi qu'aux pneumatiques comprenant de tels composites,

### Art antérieur

Les nappes de renforcement des pneumatiques comprennent habituellement un mélange caoutchoutique et des câbles de renforcement, souvent métalliques et recouverts en surface de laiton. Ces nappes étant soumises à des contraintes importantes lors du roulage des pneumatiques, on comprend que l'adhésion entre la gomme et les éléments de renforcement est une propriété clé.

La fonction d'adhésion impose généralement des formulations spécifiques au mélange caoutchoutique, notamment la nécessité d'un taux de soufre et d'oxyde de zinc élevés, une faible quantité d'acide stéarique, la présence de sel de cobalt, l'emploi d'accélérateur à phase retard longue. Or ces systèmes de vulcanisation à fort taux de soufre constituent une forte contrainte lors de la fabrication de semi-finis, en particulier pour éviter des réticulations prématurées.

Il serait donc intéressant pour les manufacturiers de pneumatique de trouver des formulations de composition de caoutchouc permettant d'abaisser les teneurs en soufre, voire de s'affranchir du soufre dans les composites tout en permettant une bonne adhésion sur les câbles de renforcement, que ceux-ci soient recouverts ou non d'un métal ou d'un alliage spécifique.

Les documents WO 2017/081387 et WO 2017/081388 présentent une composition de caoutchouc et un composite à base d'une matrice polymère comportant un polymère diénique fonctionnel. Ce polymère diénique fonctionnel porte au moins un groupe aromatique substitué par au moins deux fonctions hydroxy vicinales. La réticulation de la composition de caoutchouc est réalisée par un système de vulcanisation ou à base d'un ou plusieurs composés peroxydes. De bonnes propriétés d'adhésion de la composition de caoutchouc au métal sont obtenues, mais nécessitent l'utilisation d'un polymère greffé.

La demande JP 2011252107 décrit une composition de caoutchouc ayant une bonne adhésion au métal, cette composition comprenant un élastomère diénique et du sel de cobalt. De l'acide gallique ou un hydrate d'acide gallique facilite la dissociation du sel de cobalt. La composition est réticulée avec un système à base de soufre. Bien que présentant de bonnes caractéristiques d'adhésion, cette composition met en œuvre à la fois du soufre et un sel de cobalt.

Poursuivant ses recherches, la demanderesse a découvert une composition de caoutchouc comprenant un composé polyphénolique spécifique, qui présente de très bonnes caractéristiques d'adhésion aussi bien avec des systèmes de réticulation à base de soufre, y compris avec de faibles teneurs en soufre, qu'avec des systèmes de réticulation sans soufre. La composition selon l'invention permet en particulier d'obtenir une excellente adhésion sans présence de sels de cobalt et ce, que le câble soit recouvert d'un métal ou d'un alliage spécifique ou non.

### Description détaillée de l'invention

L'invention concerne une composite à base d'au moins un élément de renfort comprenant une surface métallique, le métal de la surface métallique étant le fer, le cuivre, l'étain, le zinc ou un alliage comportant au moins un de ces métaux, et d'une composition de caoutchouc à base d'au moins un élastomère, une charge renforçante, un système de réticulation et au moins un composé polyphénolique, le composé polyphénolique comprenant au moins trois cycles aromatiques comprenant 6 atomes de carbone, chacun étant porteur au moins de deux groupes hydroxyles vicinaux, ledit composé polyphénolique étant choisi parmi les gallotannins

### Définitions

Par l'expression "composition à base de", il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Elastomère

La composition selon l'invention, comprend au moins un élastomère, de manière préférée choisi parmi les élastomères diéniques, oléfiniques, thermoplastiques et leurs mélanges.

### • Élastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
(a) tout homopolymère d'un monomère diène conjugué ou non ayant de 4 à 18 atomes de carbone ;
(b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le paratertiobutylstyrène.

À titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

### • Élastomère oléfinique

Par élastomère oléfinique, on entend au sens de la présente invention un élastomère dont la chaine élastomérique est une chaine carbonée comportant majoritairement des unités monomériques oléfine notées O.

Les monomères O peuvent provenir de toute oléfine connue par l'homme de l'art, comme par exemple, l'éthylène, le propylène, le butylène, l'isobutylène, ces monomères étant éventuellement substitués par des groupes alkyles linéaires ou ramifiés.

Préférentiellement O est un motif éthylène [-CH2-CH2-], et dans ce cas préférentiel, l'élastomère oléfinique est un élastomère éthylénique.

Le taux molaire de O est supérieur à 50%. Plus précisément, le taux molaire de O est compris entre 50 et 100%, préférentiellement entre 50 et 95%, préférentiellement entre 65 et 85%. L'élastomère oléfinique au sens de la présente invention est donc un copolymère comportant également de 0 à 50% molaire de motifs non oléfiniques, c'est-à-dire différents de O.

Les motifs non oléfiniques, notés A', sont présents dans la chaine carbonée de façon à ce que le taux molaire total représenté par les monomères O et A' soit égal à 100%. Les monomères non oléfiniques utiles à la préparation des élastomères oléfiniques peuvent être choisis parmi les monomères non oléfiniques ne conduisant pas à des insaturations et les monomères qui, une fois polymérisés, conduisent à des insaturations portées par la chaine élastomère (autres que des monomères diéniques).

Les monomères non oléfiniques ne conduisant pas à des insaturations sont essentiellement des monomères vinyliques et acryliques/méthacryliques. Par exemple, de tels monomères peuvent être choisis parmi le styrène, le vinyle acétate, l'alcool vinylique, l'acrylonitrile, l'acrylate de méthyle, le méthacrylate de méthyle, ces monomères étant éventuellement substitués par des groupes alkyles, aryles ou d'autres groupes fonctionnalisés.

Par exemple également, les monomères non diéniques utiles à la préparation des élastomères oléfiniques porteurs d'insaturations par copolymérisation sont tous ceux connus de l'homme de l'art pour former des élastomères insaturés, tels que par exemple le méthacrylate de dicyclopentadiényloxyéthyle.

### • Elastomère thermoplastique (TPE)

Par élastomères thermoplastiques, on entend au sens de la présente invention des élastomères thermoplastiques (en abrégé « TPE ») qui ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique préférentiellement compris dans la composition selon l'invention est un copolymère à blocs dont la nature chimique des blocs thermoplastiques et élastomères peut varier.

De manière connue, les TPE présentent deux pics de température de transition vitreuse (« Tg », mesurée selon la norme ASTM D3418), la température la plus basse, étant relative à la partie élastomère du TPE, et la température la plus haute, étant relative à la partie thermoplastique du TPE. Ainsi, les blocs souples des TPE se définissent par une Tg inférieure à la température ambiante (25°C), tandis que les blocs rigides ont une Tg supérieure à 80°C.

Dans la présente demande, lorsqu'il est fait référence à la température de transition vitreuse du TPE, il s'agit de la Tg relative au bloc élastomère. Le TPE présente une température de transition vitreuse qui est préférentiellement inférieure ou égale à 25°C, plus préférentiellement inférieure ou égale à 10°C. Une valeur de Tg supérieure à ces minima peut diminuer les performances de la composition selon l'invention lors d'une utilisation à très basse température ; pour une telle utilisation, la Tg du TPE est plus préférentiellement encore inférieure ou égale à -10°C. De manière préférentielle également, la Tg du TPE est supérieure à -100°C.

Pour être de nature à la fois élastomère et thermoplastique, le TPE doit être muni de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des copolymères diblocs, comprenant un bloc thermoplastique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Le TPE peut se présenter sous une forme linéaire, étoilée à au moins trois branches, branchée ou dendrimère.

Par exemple, le TPE est un copolymère choisi dans le groupe suivant : styrène/ isobutylène/ styrène (SIBS), styrène/ butadiène/ styrène (SBS), styrène/ isoprène/ styrène (SIS), polybutadiène/ polyuréthane (TPU), polyéther/ polyester (COPE), polyéther/ polyamide (PEBA).

Il est également possible que les TPE donnés en exemple ci-dessus soient mélangés entre eux au sein de la composition selon l'invention.

A titre d'exemples d'élastomères TPE commercialement disponibles, on peut citer les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » ( e.g. « Vector 4114 », « Vector 8508 »). Parmi les TPE multiblocs, on peut citer le TPE « Vistamaxx » commercialisé par la société Exxon ; le TPE COPE commercialisé par la société DSM sous la dénomination « Arnitel », ou par la société Dupont sous le dénomination « Hytrel », ou par la société Ticona sous le dénomination « Riteflex » ; le TPE PEBA commercialisé par la société Arkema sous le dénomination « PEBAX » ; le TPE TPU commercialisé par la société Sartomer sous le dénomination « TPU 7840 », ou par la société BASF sous le dénomination « Elastogran ».

### • Fonctionnalisation

Dans un arrangement particulier, la composition selon l'invention comprend au moins un élastomère fonctionnalisé. Par « fonctionnalisé », on entend qu'il est porteur d'un groupe fonctionnel, préférentiellement d'un groupe fonctionnel comprenant une fonction telle qu'une fonction diène conjuguée, une fonction époxyde, une fonction carbonyle, une fonction anhydride ou une fonction ester d'acide.

Les fonctions présentes dans l'élastomère sont obtenues de manière connue de l'Homme du métier par copolymérisation ou par modification post-polymérisation, et sont soit portées directement par le squelette de la chaine, soit portées par un groupe latéral selon le mode d'obtention.

Dans un arrangement préféré, la composition selon l'invention comprend au moins un élastomère fonctionnalisé comprenant une fonction diène conjuguée.

Par « fonction diène conjuguée », bien connue de l'homme de l'art, on entend la présence de deux doubles liaisons carbone-carbone successives, qui peuvent être localisées soit le long de la chaîne de l'élastomère, soit sur une ramification de la chaîne élastomérique, auquel cas on parlera de fonction pendante.

Dans un autre arrangement préféré, la composition de caoutchouc selon l'invention comprend au moins un élastomère fonctionnalisé époxyde, et de manière préférée un élastomère diénique époxydé.

Les fonctions époxydes présentes dans l'élastomère sont obtenues par copolymérisation ou par modification post-polymérisation, et seront soit portées directement par le squelette de la chaine, soit portées par un groupe latéral selon le mode d'obtention, par exemple par époxydation ou toute autre modification de fonctions diéniques présentes dans la chaine élastomérique après copolymérisation.

Les élastomères époxydés peuvent par exemple être obtenus de manière connue par époxydation de l'élastomère non époxydé équivalent, par exemple par des procédés à base de chlorohydrine ou de bromohydrine ou des procédés à base de peroxydes d'hydrogène, d'alkyl hydroperoxydes ou de peracides (tel que acide peracétique ou acide performique), voir notamment Kautsch. Gummi Kunstst. 2004, 57(3), 82. Les fonctions époxydes sont alors dans la chaîne de polymère. On peut citer notamment les caoutchoucs naturels époxydés (en abrégé "ENR") ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être préparés par des techniques d'époxydation bien connues de l'homme du métier.

Les élastomères époxydés peuvent également présenter des fonctions époxydes pendantes. Dans ce cas, ils peuvent être obtenus soit par modification post-polymérisation (voir par exemple J. Appl. Polym. Sci. 1999, 73, 1733), ou par copolymérisation radicalaire des monomères avec des monomères porteurs de fonctions époxydes, notamment les esters de l'acide méthacrylique comportant des fonctions époxydes, comme par exemple le méthacrylate de glycidyle (polymérisation radicalaire bien connue de l'homme du métier de la synthèse de polymères, voir par exemple Macromolécules 1998, 31, 2822, ou US20110098404) ou par l'utilisation d'oxydes de nitrile porteurs de fonctions époxydes.

Des élastomères diéniques porteurs de groupes époxydes ont été décrits par exemple dans US 2003/120007 ou EP 0763564, US 6903165 ou EP 1403287.

Des élastomères oléfiniques époxydés et leurs procédés d'obtention sont bien connus de l'homme du métier. Des élastomères oléfiniques porteurs de groupes époxydes ont été décrits par exemple dans les documents EP 0247580 ou US 5576080. La société Arkema propose dans le commerce, des polyéthylènes époxydés sous les dénominations commerciales « Lotader AX8840» et « Lotader AX8900 ».

Dans le cas préféré où l'élastomère époxydé est un élastomère diénique époxydé, il est préférentiellement choisi dans le groupe constitué par les caoutchoucs naturels (NR) époxydés (en abrégé "ENR"), les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

### Système de réticulation

Le système de réticulation peut être tout type de système connu de l'homme de l'art dans le domaine des compositions de caoutchouc pour pneumatique.

De manière connue de l'Homme du métier, la réticulation des élastomères peut être mise en œuvre de plusieurs manières en fonction de la nature desdits élastomères.

Dans l'arrangement particulier où l'élastomère est majoritairement un élastomère thermoplastique, il est possible de n'utiliser aucun système de réticulation et la solidification des blocs thermoplastiques peut suffire à rigidifier l'élastomère efficacement par une forme de réticulation physique des blocs thermoplastiques. Dans un autre arrangement particulier où l'élastomère est majoritairement un élastomère thermoplastique, le système de réticulation peut être préférentiellement à base d'un ou plusieurs composés peroxydes, tel que décrit par exemple dans le document WO2017103387, ou encore la réticulation peut être réalisée par rayonnement tel que décrit par exemple dans le document WO2017064091.

Dans l'arrangement particulier où l'élastomère composant la composition de caoutchouc selon l'invention comprend majoritairement des élastomères diéniques, le système de réticulation peut être à base de soufre, d'un ou plusieurs composés peroxydes ou à base d'un ou plusieurs composés de type polysulfure de thiurame.

Lorsque l'élastomère de la composition selon l'invention est fonctionnalisé, des agents de réticulation particuliers peuvent être utilisés, selon la nature de la fonction portée par l'élastomère. Ainsi, on peut notamment réticuler les élastomères époxydés décrits précédemment par des polyacides, ou réticuler les élastomères présentant des doubles liaisons conjuguées décrits précédemment par des polydiénophiles.

### • Soufre

Dans le cas particulier où la composition selon l'invention comprend un élastomère diénique, le système de réticulation peut préférentiellement être à base de soufre. On parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5 pce et très préférentiellement compris entre 0,5 et 3 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### • Péroxydes

Dans le cas particulier où la composition selon l'invention comprend un élastomère diénique ou un élastomère thermoplastique, le système de réticulation est préférentiellement à base d'un ou plusieurs composés peroxydes, le ou lesdits composés peroxydes représentant de 0,01 à 10 pce.

Le peroxyde utilisable selon l'invention peut être tout peroxyde connu de l'homme de l'art.

De manière préférée, le peroxyde est choisi parmi les peroxydes organiques.

Par « peroxyde organique », on entend un composé organique, c'est-à-dire contenant du carbone, comportant un groupe -O-O- (deux atomes d'oxygène liés par une liaison covalente simple).

Durant le procédé de réticulation, le peroxyde organique se décompose au niveau de sa liaison instable O-O en radicaux libres. Ces radicaux libres permettent la création des liaisons de réticulation.

Selon un mode de réalisation, le peroxyde organique est choisi dans le groupe constitué par les peroxydes de dialkyle, les monoperoxycarbonates, les peroxydes de diacyle, les peroxycétales, les peroxyesters, et leurs mélanges.

De préférence, les peroxydes de dialkyle sont choisis dans le groupe constitué par le peroxyde de dicumyle, le peroxyde de di-t-butyle, peroxyde de t-butylcumyle , le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amylperoxy)isopropyl] benzène, le peroxyde de di-t-amyle, le 1,3,5-tri-[(t-butylperoxy)isopropyl]benzène, le 1,3-diméthyl-3-(t-butylperoxy)butanol, le 1,3-diméthyl-3-(t -amylperoxy) butanol, et leurs mélanges.

Un mélange de peroxyde de dicumyle et de 1,3 et 1,4-isopropylcumyl peroxyde (commercialisé par exemple par Arkema sous le nom commercial Luperox^{®} DC60) est également intéressant.

Certains monoperoxycarbonates tels que le OO-tert-butyl-O-(2-éthylhexyl) monoperoxycarbonate, le OO-tert-butyl-O-isopropyl monoperoxycarbonate, le OO-tert-amyl-O-2-éthyl hexyl monoperoxycarbonate, et leurs mélanges, peuvent également être utilisés.

Parmi les peroxydes de diacyles, le peroxyde préféré est le peroxyde de benzoyle.

Parmi les peroxycétales, les peroxydes préférés sont choisis dans le groupe constitué par le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane, et leurs mélanges.

De préférence, les peroxyesters sont choisis dans le groupe constitué par le tert-butylperoxybenzoate, le tert-butyleperoxy-2-ethylhexanoate, le tert-butyleperoxy-3,5,5-triméthylehexanoate et leurs mélanges.

De manière particulièrement préférée, le peroxyde organique est choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et les mélanges de ces derniers.

### • Polysulfure de thiurame

Dans le cas particulier où la composition selon l'invention comprend un élastomère diénique, le système de réticulation est préférentiellement à base d'un ou plusieurs composés de type polysulfure de thiurame, le ou lesdits composés polysulfure de thiurame représentant de 0,5 à 15 pce.

Après cuisson, un tel agent de réticulation se révèle apporter une cohésion suffisante à la composition, sans lui conférer une réticulation véritable : la réticulation mesurable, via une méthode de gonflement classique connue de l'homme du métier, avoisine en fait le seuil de détection. De préférence, le taux de polysulfure de thiurame est compris entre 0,5 et 10 pce, plus préférentiellement compris dans un domaine de 1 à 5 pce. De tels composés sont connus de l'Homme du métier et décrit par exemple dans le document WO 2011/092124. À titre de composés polysulfure de thiurame utilisables comme système de réticulation chimique, on peut citer le disulfure de tétrabenzylthiurame ("TBzTD"), le disulfure de tétraméthylthiurame ("TMTD"), le tétrasulfure de dipentaméthylènethiurame ("DPTT") et les mélanges de tels composés.

### • Polyacides

Dans le cas particulier où la composition selon l'invention comprend un élastomère fonctionnalisé époxyde, le système de réticulation est préférentiellement à base d'un ou plusieurs composés polyacides, le ou lesdits composés diacides représentant de 0,2 à 100 pce, de préférence de 0,2 à 50 pce, plus préférentiellement de 0,9 à 25 pce.

Par composé polyacide tel qu'un diacide, on entend un composé comprenant plusieurs fonctions acide carboxylique, par exemple deux fonctions acide carboxylique portées de part et d'autre d'un groupement A, A étant un groupement divalent hydrocarboné comprenant de 1 à 1800 atomes de carbones. De tels composés sont décrits par exemple dans la demande WO 2014/095582. Ledit système de réticulation à base d'un ou plusieurs composés polyacides comprend également un imidazole représentant de 0,01 à 4 équivalent molaire, de préférence de 0,01 à 3 équivalent molaire par rapport aux fonctions acide carboxyliques présentes sur le ou les composés polyacides. À titre de composés imidazoles utilisables dans le système de réticulation chimique, on peut citer le 1,2-diméthylimidazole, le 1-décyl-2-méthylimidazole, ou le 1-benzyl-2-méthylimidazole, ce dernier étant préférentiel.

Par l'expression « équivalent molaire », bien connue de l'Homme du métier, il faut entendre le quotient entre le nombre de moles du composé ou d'une fonction concerné et le nombre de moles du composé ou de fonction de référence. Ainsi, 2 équivalents d'un composé ou de fonction B par rapport à un composé ou une fonction A représentent 2 moles du composé ou de fonction B lorsqu'une mole du composé ou de fonction A est utilisée.

### • Polydiénophile

Dans le cas particulier où la composition selon l'invention comprend un élastomère fonctionnalisé comprenant une fonction diène conjuguée, le système de réticulation est préférentiellement à base d'un ou plusieurs poly-diénophile.

Conviennent en particulier les composés de formule générale (I) 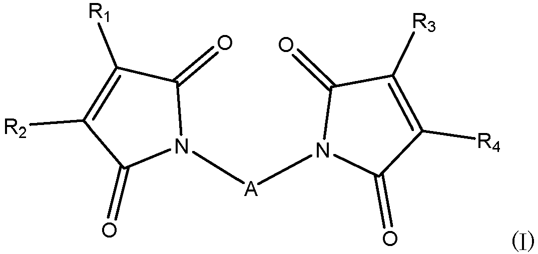 dans laquelle
- A représente une liaison covalente ou un groupement hydrocarboné comportant au moins 1 atome de carbone, éventuellement substitué et éventuellement interrompu par un ou plusieurs hétéroatomes,
- R₁, R₂, R₃ et R₄ représentent indépendamment les uns des autres des groupements identiques ou différents choisis parmi l'atome d'hydrogène et les groupements hydrocarbonés, R₁ et R₂ d'une part et R₃ et R₄ d'autre part pouvant former ensemble avec les atomes de carbone du cycle auxquels ils se rattachent, un cycle.

De préférence dans le poly-diénophile de formule générale (I), A représente une liaison covalente ou un groupement divalent hydrocarboné comportant de 1 à 1800 atomes de carbone, préférentiellement de 2 à 300 atomes de carbone, plus préférentiellement de 2 à 100 atomes de carbone, et de manière très préférentielle de 2 à 50 atomes de carbone. Au-dessus de 1800 atomes de carbone, le poly-diénophile est un agent de réticulation moins performant. Ainsi, A représente de préférence un groupement divalent hydrocarboné comportant de 3 à 50 atomes de carbone, préférentiellement de 5 à 50 atomes de carbone, plus préférentiellement de 8 à 50 atomes de carbone, et encore plus préférentiellement de 10 à 40 atomes de carbone.

Préférentiellement, A est un groupement divalent de type aliphatique, ou aromatique ou un groupement comportant au moins une partie aliphatique et une partie aromatique, et de préférence, un groupement divalent de type aromatique, ou un groupement comportant au moins une partie aliphatique et une partie aromatique. Plus préférentiellement, A est un groupement divalent comportant au moins une partie aliphatique et une partie aromatique de type arylène-dialkylène ou alkylène-diarylène; et notamment, A est préférentiellement un groupement phénylène-dialkylène (tel que phénylène-diméthylène ou phénylène-diéthylène) ou un groupement alkylène-diphénylène (tel que méthylène-diphénylène).

De préférence, lorsque A est interrompu, il l'est par au moins un hétéroatome choisi parmi l'oxygène, l'azote et le soufre, de préférence l'oxygène.

Selon un mode de réalisation préférentiel, A est substitué par au moins un radical choisi parmi les radicaux alkyle, cycloalkylalkyle, aryle, aralkyle, hydroxyle, alkoxy, amino et carbonyle.

Les radicaux R₁, R₂, R₃ et R₄ représentent indépendamment les uns des autres des groupements identiques ou différents choisis parmi l'atome d'hydrogène, les alkyles ayant de 1 à 20 atomes de carbone, les cycloalkyles ayant de 5 à 24 atomes de carbone, les aryles ayant de 6 à 30 atomes de carbone et les aralkyles ayant de 7 à 25 atomes de carbone; groupements qui peuvent éventuellement être interrompus par un ou plusieurs hétéroatomes et/ou substitués, R₁ et R₂ d'une part et R₃ et R₄ d'autre part pouvant former ensemble avec les atomes de carbone du cycle auxquels ils se rattachent, un cycle choisi parmi les cycles aromatiques, hétéroaromatiques ou aliphatiques, comprenant de 5 à 12 atomes de carbone, de préférence 5 ou 6 atomes de carbone. De préférence, R₁, R₂, R₃ et R₄ représentent indépendamment les uns des autres des groupements identiques ou différents choisis parmi l'atome d'hydrogène, et les alkyles linéaires ou ramifiés ayant de 1 à 6 atomes de carbone ; groupements qui peuvent éventuellement être substitué.

De préférence dans la composition selon l'invention, le taux de poly-diénophile est compris dans un domaine allant de 0,2 à 100 pce, de préférence de 0,2 à 50 pce. En effet En dessous de 0,2 pce de poly-diénophile, l'effet de la réticulation n'est pas sensible tandis qu'au-delà de 100 pce de poly-diénophile, le poly-diénophile, agent de réticulation, devient majoritaire en poids par rapport à la matrice polymérique. Ainsi, préférentiellement, le taux de poly-diénophile est compris dans un domaine allant de 0,4 à 27 pce, de préférence de 0,9 à 20 pce.

Les poly-diénophiles utiles pour les besoins de l'invention sont soit disponibles dans le commerce, soit facilement préparés par l'homme de l'art selon des techniques bien connues telles que les voies décrites par exemple dans le document Walter W. Wright and Michael Hallden-Abberton "Polyimides" in Ullmann's Encyclopedia of Industrial Chemistry, 2002, Wiley-VCH, Weinheim. doi:10.1002/14356007.a21_253*.*

Par exemple, à titre de poly-diénophiles disponibles dans le commerce et utiles aux besoins de l'invention, on peut citer les bis maléimides, et les bis-citraconimides.

Dans un arrangement préféré, la composition de caoutchouc selon l'invention est dépourvue de système de réticulation autre que l'un de ceux décrit précédemment. En particulier, lorsque le système de réticulation est à base d'un ou plusieurs composés peroxydes, à base d'un ou plusieurs composés polydiénophiles ou à base d'un ou plusieurs composés diacides, il est préférentiellement dépourvu de système de vulcanisation, ou en contient moins de 1 pce, de préférence moins de 0,5 pce et plus préférentiellement moins de 0,2 pce. De même la composition est préférentiellement dépourvue de tout accélérateur ou activateur de vulcanisation, tels qu'ils sont connus de l'homme du métier, ou en contient moins de 1 pce, de préférence moins de 0,5 pce et plus préférentiellement moins de 0,2 pce.

Lorsque le système de réticulation préférentiellement compris dans la composition selon l'invention est à base d'un ou plusieurs composés de type polysulfure de thiurame, il ne nécessite préférentiellement pas la présence d'un autre agent de réticulation, ni soufre ni autre agent de vulcanisation additionnel (donneur de soufre, accélérateur ou activateur de vulcanisation). La composition de l'invention peut donc être préférentiellement dépourvue de soufre ou de tels agents de vulcanisation additionnels, ou bien n'en comporter qu'une très faible quantité, moins de 1 pce, de préférence moins de 0,5 pce, plus préférentiellement moins de 0,2 pce.

Selon un autre mode de réalisation préféré, la composition de l'invention peut être également dépourvue de zinc ou d'oxyde de zinc (connus comme activateurs de vulcanisation), ou bien n'en comporter qu'une très faible quantité, préférentiellement moins de 1 pce, de préférence moins de 0,5 pce, plus préférentiellement moins de 0,2 pce.

Dans les arrangements préférés où le système de réticulation n'est pas à base de soufre, la composition de caoutchouc conforme à l'invention est de préférence dépourvue de soufre moléculaire, ou en comprend moins de 1 pce, de préférence moins de 0,5 pce et plus préférentiellement moins de 0,2 pce.

### Charge renforçante

La composition de caoutchouc de l'invention peut comprendre une ou plusieurs charges renforçantes.

On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(·D) », « Hi-Sil 243LD », « Hi-Sil 210 », « Hi-Sil HDP 320G » de la société PPG.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Pour les noirs de carbone, la surface spécifique STSA est déterminée selon la norme ASTM D6556-2016.

À titre d'autres exemples de charges inorganiques susceptibles d'être utilisées dans les compositions de caoutchouc de l'invention peuvent être encore cités les charges minérales du type alumineux, en particulier de l'alumine (Al₂O₃), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2. On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier saura adapter le taux de charge renforçante total selon l'utilisation concernée, notamment selon le type de pneumatiques concerné, par exemple pneumatique pour moto, pour véhicule de tourisme ou encore pour véhicule utilitaire tel que camionnette ou poids lourd. De manière préférentielle, le taux de charge renforçante totale (noir de carbone et/ou charge inorganique renforçante telle que silice) est compris entre 10 et 200 pce, plus préférentiellement entre 25 et 180 pce, l'optimum étant de manière connue différent selon les applications particulières visées.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

La teneur en agent de couplage dans la composition de l'invention est préférentiellement inférieure ou égale à 35 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine allant de 3 à 10 pce. Ce taux est aisément ajusté par l'homme du métier selon le taux de charge inorganique renforçante utilisé dans la composition de l'invention.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

### Composé polyphénolique

La composition selon l'invention comprend au moins un composé polyphénolique comprenant au moins trois cycles aromatiques comprenant 6 atomes de carbone, chacun étant porteur au moins de deux groupes hydroxyles vicinaux.

Par vicinaux, on entend que les deux groupes hydroxyles portés par le cycle aromatique sont en position ortho l'un par rapport à l'autre.

La masse molaire du composé polyphénolique est préférentiellement supérieure à 600 g/mol, préférentiellement supérieure à 800 g/mol, de manière préférée supérieure à 1000 g/mol et de manière très préférée supérieure à 1200 g/mol.

Le composé polyphénolique est choisi parmi les gallotannins, c'est-à-dire des esters d'acide gallique et de polyol, le polyol étant de préférence choisi parmi les pentoses et les hexoses. De préférence, le composé polyphénolique est choisi parmi les esters de glucose et d'acide gallique, de manière préférée choisi parmi les polygalloyl glucoses comprenant de 3 à 10 unités galloyles, de préférence comprenant de 5 à 10 unités galloyles. De manière préférée, le composé polyphénolique est choisi parmi les trigalloyl glucoses, les pentagalloyl glucoses et les décagalloyl glucoses, et de préférence parmi le 1,2,6-Trigalloyl glucose, le 1,3,6-Trigalloyl glucose, le 1,2,3,4,6-Pentagalloyl-glucose et l'acide tannique (ou beta-D-Glucose pentakis(3,4-dihydroxy-5-((3,4,5-trihydroxybenzoyl)oxy)benzoate)). De manière très préférée le composé polyphénolique est l'acide tannique.

La composition de caoutchouc selon l'invention présente des caractéristiques d'adhésion à un élément de renfort métallique particulièrement intéressantes, notamment grâce à la présence du composé polyphénolique, en particulier pour la constitution de composites, et tout particulièrement de composites à destination de pneumatiques et ce, que l'élément de renfort soit recouvert d'un métal ou d'un alliage spécifique ou non.

La composition de caoutchouc selon l'invention comprend préférentiellement de 0,1 à 30 pce de composé polyphénolique, préférentiellement de 2 à 30 pce et très préférentiellement de 5 à 25 pce. En deçà de 0,1 pce, le composé polyphénolique n'a pas d'effet notable sur les propriétés d'adhésion de la composition de caoutchouc selon l'invention. Au-delà de 30 pce, on n'observe plus de gain significatif.

De manière surprenante, une très bonne adhésion de la composition selon l'invention sur des câbles de renforcement est obtenue sans qu'il soit besoin d'utiliser de sels de cobalt. Ainsi, la composition selon l'invention est préférentiellement dépourvue de sels de cobalt, tels qu'ils sont connus de l'homme du métier, et dont l'effet connu est une amélioration de l'adhésion, ou en contient moins de 1 pce, de préférence moins de 0,5 pce, plus préférentiellement moins de 0,2 pce et très préférentiellement moins de 0,1 pce.

### Additifs divers

Les compositions de caoutchouc conformes à l'invention peuvent comporter également tout ou partie des additifs usuels, connus de l'homme de l'art et habituellement utilisés dans les compositions de caoutchouc pour pneumatiques, en particulier de couches internes telles que définies ultérieurement dans la présente demande, comme par exemple des plastifiants (huiles plastifiantes et/ou résines plastifiantes), des charges renforçantes ou non renforçantes autres que celles précitées, des pigments, des agents de protection tels que cires anti-ozone, anti-ozonants chimiques, anti-oxydants, des agents anti-fatigue, des résines renforçantes (telles que décrites par exemple dans la demande WO 02/10269).

Ces compositions peuvent également contenir, en complément des éventuels agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (par exemple l'octyltriéthoxysilane, ou silane octéo), des polyols, des polyéthers, des amines primaires, secondaires ou tertiaires, des polyorganosiloxanes hydroxylés ou hydrolysables.

### Préparation des compositions de caoutchouc

La composition de caoutchouc conforme à l'invention est fabriquée dans des mélangeurs appropriés, en utilisant des phases de préparation bien connues de l'homme du métier :
- une phase de travail ou malaxage thermomécanique, qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, le composé polyphénolique, les charges, les éventuels autres additifs divers. L'incorporation de la charge à l'élastomère peut être réalisée en une ou plusieurs fois en malaxant thermomécaniquement. Dans le cas où la charge, en particulier le noir de carbone, est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers.
   Le malaxage thermomécanique est réalisé à haute température, jusqu'à une température maximale comprise entre 110°C et 200°C, de préférence entre 130°C et 185°C, pendant une durée généralement comprise entre 2 et 10 minutes.
- une seconde phase de travail mécanique peut être ensuite réalisée dans un mélangeur externe tel qu'un mélangeur à cylindres, après refroidissement du mélange obtenu au cours de la première phase jusqu'à une plus basse température, typiquement inférieure à 120°C, par exemple entre 40°C et 100°C.

Le système de réticulation éventuel sera ajouté, conformément aux connaissances de l'Homme du métier, lors de la première ou de la seconde phase lorsque celle-ci est réalisée. Par exemple, un système de réticulation à base de polyacides ou de polydiénophiles sera typiquement ajouté lors de la première phase. Un système de réticulation à base de péroxydes ou de soufre sera typiquement ajouté lors de la seconde phase.

La composition finale ainsi obtenue est ensuite calandrée, par exemple sous la forme d'une feuille ou d'une plaque, notamment pour une caractérisation au laboratoire, ou encore extrudée sous la forme d'un semi-fini (ou profilé) de caoutchouc.

La composition peut être soit à l'état cru (avant réticulation ou vulcanisation), soit à l'état cuit (après réticulation ou vulcanisation), peut être un produit semi-fini qui peut être utilisé dans un pneumatique.

La cuisson peut être conduite, de manière connue de l'Homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### Composite

L'invention concerne un composite à base d'au moins un élément de renfort et d'une composition de caoutchouc selon l'invention.

Par l'expression composite "à base au moins d'un élément de renfort et d'une composition selon l'invention", il faut entendre un composite comprenant l'élément de renfort et ladite composition, la composition ayant pu réagir avec la surface de l'élément de renfort lors des différentes phases de fabrication du composite, en particulier au cours de la réticulation de la composition ou au cours de la confection du composite avant réticulation de la composition.

Ledit élément de renfort est un élément filaire. Il peut être tout ou partie métallique ou textile.

En particulier, ledit élément de renfort peut être de nature textile, c'est-à-dire réalisé dans un matériau organique, notamment polymérique, ou inorganique, comme par exemple le verre, le quartz, le basalte ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

Ledit élément de renfort comprend une surface métallique.

La surface métallique de l'élément de renfort constitue au moins une partie, et préférentiellement la totalité de la surface dudit élément et est destinée à entrer directement au contact de la composition selon l'invention. De préférence, l'élément de renfort est métallique, c'est-à-dire constitué d'un matériau métallique.

La composition selon l'invention enrobe au moins une partie de l'élément de renfort, préférentiellement la totalité dudit élément.

Selon une première variante de l'invention, la surface métallique de l'élément de renfort est faite d'un matériau différent du restant de l'élément de renfort. Autrement dit, l'élément de renfort est fait d'un matériau qui est au moins en partie, préférentiellement totalement, recouvert par une couche métallique qui constitue la surface métallique. Le matériau au moins en partie, préférentiellement totalement, recouvert par la surface métallique est de nature métallique ou non métallique, de préférence métallique.

Selon une deuxième variante de l'invention, l'élément de renfort est fait d'un même matériau, auquel cas l'élément de renfort est fait d'un métal qui est identique au métal de la surface métallique.

La surface métallique comprend un métal choisi dans le groupe constitué par le fer, le cuivre, le zinc, l'étain, et les alliages comportant au moins un de ces métaux. Les alliages peuvent être par exemple des alliages binaires ou ternaires, comme l'acier, le bronze et le laiton.

De manière plus préférentielle, le métal de la surface métallique est l'acier, le laiton (alliage Cu-Zn), le zinc ou le bronze (alliage Cu-Sn), de manière encore plus préférée le laiton ou l'acier, et de manière très préférée le laiton.

Dans la présente demande, l'expression « le métal de la surface métallique est le métal ci-après désigné » revient à dire que la surface métallique est en métal ci-après désigné. Par exemple l'expression « le métal de la surface métallique est le laiton » écrite plus haut signifie que la surface métallique est en laiton. Certains métaux étant sujets à l'oxydation au contact de l'air ambiant, le métal peut être en partie oxydé.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Selon un mode de réalisation préféré, le composite est un produit renforcé qui comprend plusieurs éléments de renforcement tels que définis ci-dessus et une gomme de calandrage dans laquelle sont noyés les éléments de renforcement, la gomme de calandrage consistant en la composition de caoutchouc selon l'invention. Selon ce mode de réalisation, les éléments de renforcement sont agencés généralement côte à côte selon une direction principale. Pour une application envisagée dans le pneumatique, le composite peut donc constituer une armature de renforcement pour pneumatique.

Le composite conforme à l'invention peut être à l'état cru (avant réticulation de la composition de caoutchouc) ou à l'état cuit (après réticulation de la composition de caoutchouc). Le composite est cuit après mise en contact du ou des éléments de renfort avec la composition de caoutchouc selon l'invention.

Le composite peut être fabriqué par un procédé qui comprend les étapes suivantes :
- Réaliser deux couches de la composition selon l'invention,
- Prendre le ou les éléments de renfort en sandwich dans les deux couches en le(s) déposant entre les deux couches,
- Le cas échéant cuire le composite.

Alternativement, le composite peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un pneumatique, la cuisson du composite a lieu généralement lors de la cuisson de l'enveloppe du pneumatique.

### Pneumatique

Le pneumatique, autre objet de l'invention, a pour caractéristique essentielle de comprendre le composite conforme à l'invention. Le pneumatique peut être à l'état cru (avant réticulation de la composition de caoutchouc) ou à l'état cuit (après réticulation de la composition de caoutchouc). Généralement, au cours de la fabrication du pneumatique, la composition ou le composite est déposé à l'état cru (c'est-à-dire avant réticulation de la composition de caoutchouc) dans la structure du pneumatique avant l'étape de cuisson du pneumatique.

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes des pneumatiques.

Aussi, l'invention concerne également un pneumatique comprenant une couche interne comportant un composite selon la présente invention. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

### Exemples

On procède, pour préparer les différentes compositions de caoutchouc, de la manière suivante : on introduit dans un mélangeur interne (taux de remplissage final : environ 70% en volume), dont la température initiale de cuve est d'environ 60°C, successivement l'élastomère, puis tous les autres constituants du mélange. On conduit alors un travail thermomécanique en une étape jusqu'à atteindre une température maximale de « tombée » de 150°C. On récupère le mélange ainsi obtenu, on le refroidit sur un mélangeur externe (homo-finisseur) à 30°C, en mélangeant le tout.

Le système de réticulation est ajouté, conformément aux connaissances de l'Homme du métier, lors de la première phase pour le système de réticulation polyacide, et lors de la seconde phase pour les systèmes de réticulation à base de péroxydes et de soufre.

Les compositions de caoutchouc préparées sont présentées dans les tableaux 1, 2 et 3.

La qualité de la liaison entre la composition de caoutchouc et un élément de renfort est déterminée par un test dans lequel on mesure la force nécessaire pour extraire des tronçons de fils unitaires présentant une surface métallique de la composition de caoutchouc réticulée. À cette fin, on prépare des composites sous la forme d'éprouvette contenant d'une part des fils unitaires métalliques à titre d'élément de renfort présentant une surface métallique et d'autre part un mélange élastomère comprenant la composition de caoutchouc réticulée après mise en contact avec l'élément de renfort.

### • Préparation des éprouvettes

Les compositions de caoutchouc sont utilisées pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors cuit. À titre d'exemple, dans le cas présent, la cuisson du bloc est réalisée à 170°C pendant un temps variant de 5 min à 90 min selon la composition sous pression de 5.5 tonnes.

Les fils unitaires sont des fils en acier clair, ou recouverts de laiton ou de zinc. Leur diamètre est de 1,75 mm ; l'épaisseur du revêtement en laiton ou en zinc est de 200 nm à 1 µm.

### • Test d'adhésion

À l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée. Dans les tableaux 1 à 3, cette éprouvette témoin est faite respectivement à partir de la composition « T1 », « T3 » et « T7 ».

Une valeur supérieure à celle de l'éprouvette témoin, arbitrairement fixée à 100, indique un résultat amélioré, c'est-à-dire une force d'arrachement supérieure à celle de l'éprouvette.

Les résultats des tests d'adhésion effectués sur des éprouvettes témoins et sur des éprouvettes conformes à l'invention sont présentés dans les tableaux 1 à 3.

Présentant des valeurs supérieures à 100 dans le test d'adhésion, les composites conformes à l'invention présentent une résistance à l'arrachement fortement améliorée, que l'élément de renfort soit recouvert d'un métal ou d'un alliage spécifique ou non.

### • Réticulation Péroxyde

**Tableau 1**

| | ***T1*** | ***T2*** | ***C3*** | **C2** | ***C1*** |
|---|---|---|---|---|---|
| *NR (1)* | 100 | 100 | 100 | 100 | 100 |
| *Noir de Carbone (2)* | 50 | 50 | 50 | 50 | 50 |
| *Dicumyl péroxide (3)* | 2,5 | 2,5 | 2,5 | 2,5 | 2,5 |
| *Polymère diénique greffé catéchol (4)* | 0 | 15 | 0 | 0 | 0 |
| *Acide tannique (5)* | 0 | | 5 | 15 | 25 |

| **Résultats tests adhésion** | | | | | |
|---|---|---|---|---|---|
| Laiton | 100 | 2080 | 1700 | 4820 | 3880 |
| Acier | 100 | 245 | 626 | 550 | 581 |
| Zinc | 100 | n.m | n.m. | 1467 | 3100 |

| | | | | | |
|---|---|---|---|---|---|
| Toutes les compositions sont données en pce ; n.m. = non mesuré (1) Caoutchouc Naturel (2) N326 (3) Fourni par Sigma-Aldrich (4) poly(isoprene-co-dihydroxycinnamic methacrylate), Mn=6500 g/mol, Mw=15300 g/mol, groupe 3,4-dihydroxyaryl 0,92 meq/g fourni par la société Specifie Polymers (5) CAS 1401-55-4, fourni par Sigma-Aldrich | | | | | |

On note que la composition « T1 » ne comporte aucun composé polyphénolique spécifique. Le polymère diénique greffé cathécol correspond à l'enseignement de WO2017/081387.

### • Réticulation diacide

**Tableau 2**

| | ***T3*** | ***T4*** | ***T5*** | ***T6*** | ***C1*** |
|---|---|---|---|---|---|
| *eNR25 (1)* | 100 | 100 | 100 | 100 | 100 |
| *Silice 160 MP (2)* | 60 | 60 | 60 | 60 | 60 |
| *Silane Octéo (3)* | 4,8 | 4,8 | 4,8 | 4,8 | 4,8 |
| *6PPD (4)* | 1,5 | 1,5 | 1,5 | 1,5 | 1,5 |
| *Diacide PBACN (5)* | 24,8 | 24,8 | 24,8 | 24,8 | 24,8 |
| *Imidazole BMI (6)* | 2,2 | 2,2 | 2,2 | 2,2 | 2,2 |
| *Acide 3,4-dihydroxyhydrocinnamique (7)* | 0 | 5 | 0 | 0 | 0 |
| *Glucose (8)* | 0 | 0 | 2 | 0 | 0 |
| *Acide gallique (9)* | 0 | 0 | 0 | 5 | 0 |
| *Acide tannique (10)* | 0 | 0 | 0 | 0 | 5 |

| **Résultats tests adhésion** | | | | | |
|---|---|---|---|---|---|
| Laiton | 100 | n.m. | 125 | 400 | 402 |
| Acier | 100 | 172 | 152 | 161 | 281 |

| | | | | | |
|---|---|---|---|---|---|
| Toutes les compositions sont données en pce (1) Caoutchouc Naturel Epoxydé, « ENR-25 », de la société Guthrie Polymer ; (2) Silice 160 MP, « Zeosil 1165MP » de la société Rhodia ; (3) « Dynasylan Octeo », de la société Degussa ; (4) N-1,3-diméthylbutyl-N-phénylparaphénylènediamine (Santoflex 6-PPD de la société Flexsys) ; (5) Poly(acrylonitrile-co-butadiene), dicarboxy terminated, Sigma-Aldrich ref.418870, Mn=3800 g/mol (6) 1-benzyl-2-méthylimidazole, CAS = 13750-62-4 de la société Sigma-Aldrich ; (7) CAS = 1078-61-1 de la société Sigma-Aldrich (8) CAS = 50-99-7 de la société Sigma-Aldrich (9) CAS = 149-91-7 de la société Sigma-Aldrich (10) CAS = 1401-55-4 de la société Sigma-Aldrich | | | | | |

On note que la composition « T3 » ne comporte aucun composé polyphénolique spécifique.

### • Réticulation Soufre

**Tableau 3**

| | ***T7*** | | ***C1*** | |
|---|---|---|---|---|
| *NR (1)* | 100 | | 100 | |
| *N326 (2)* | 50 | | 50 | |
| *6PPD (3)* | | 1,5 | | 1,5 |
| *ZnO (4)* | | 5 | | 5 |
| *Acide stéarique (5)* | | 1.5 | | 1.5 |
| *CBS (6)* | | 4 | | 4 |
| *Soufre insoluble* | | 1 | | 1 |
| *Acide tannique (7)* | | 0 | 25 | |

| **Résultats tests adhésion** | | | | |
|---|---|---|---|---|
| Laiton | 100 | | 174 | |
| Acier | 100 | | 128 | |
| Zinc | 100 | | 136 | |

| | | | | |
|---|---|---|---|---|
| Toutes les compositions sont données en pce (1) Caoutchouc Naturel ; (2) Noir de carbone N326 (selon la norme ASTM D-1765) (3) N-1,3-diméthylbutyl-N-phénylparaphénylènediamine (Santoflex 6-PPD de la société Flexsys) ; (4) Oxyde de zinc, grade industriel, société Umicore (5) Stéarine (« Pristerene 4931 » de la société Uniqema) (6) N-cyclohexyl-2-benzothiazol-sulfénamide (« Santocure CBS ») de la société Flexsys (7) CAS = 1401-55-4 de la société Sigma-Aldrich | | | | |

On note que la composition « T7 » ne comporte aucun composé polyphénolique spécifique.

## Revendications

1. Composite à base d'au moins un élément de renfort comprenant une surface métallique, le métal de la surface métallique étant le fer, le cuivre, l'étain, le zinc ou un alliage comportant au moins un de ces métaux, et d'une composition de caoutchouc à base d'au moins un élastomère, une charge renforçante, un système de réticulation et au moins un composé polyphénolique, le composé polyphénolique comprenant au moins trois cycles aromatiques comprenant 6 atomes de carbone, chacun étant porteur au moins de deux groupes hydroxyles vicinaux, ledit composé polyphénolique étant choisi parmi les gallotannins.

2. Composite selon la revendication précédente dans laquelle le composé polyphénolique est choisi parmi les esters d'acide gallique et d'un polyol choisi parmi les pentoses et les hexoses.

3. Composite selon l'une des revendications précédentes dans laquelle le composé polyphénolique est choisi parmi les esters de glucose et d'acide gallique, de manière préférée choisi parmi les polygalloyl glucoses comprenant de 3 à 10, et de préférence de 5 à 10 unités galloyles.

4. Composite selon l'une des revendications précédentes dans laquelle le taux de composé polyphénolique dans la composition de caoutchouc est compris entre 0,1 et 30 pce.

5. Composite selon l'une des revendications précédentes dans laquelle la composition est dépourvue de sels de cobalt ou en contient moins de 1 pce.

6. Composite selon l'une quelconque des revendications précédentes comprenant au moins un élastomère choisi parmi les élastomères diéniques, oléfiniques, thermoplastiques et leurs mélanges.

7. Composite selon l'une des revendications précédentes, dans lequel la composition est dépourvue de soufre moléculaire ou en comprend moins de 1 pce.

8. Composite selon l'une quelconque des revendications précédentes, dans lequel la composition est dépourvue de zinc ou d'oxyde de zinc, ou bien n'en comporte que moins de 1 pce, de préférence moins de 0,5 pce, plus préférentiellement moins de 0,2 pce.

9. Composite selon l'une quelconque des revendications précédentes dans lequel, dans la composition de caoutchouc, la charge renforçante comporte du noir de carbone, de la silice ou un mélange de noir de carbone et de silice.

10. Pneumatique comprenant un composite selon l'une des revendications 1 à 9.

11. Pneumatique selon la revendication 10 comprenant une couche interne comprenant un composite selon l'une des revendications 1 à 9.

## Patentansprüche

1. Verbundwerkstoff auf Basis mindestens eines Verstärkungselements, das eine Metalloberfläche umfasst, wobei es sich bei der Metalloberfläche um Eisen, Kupfer, Zinn, Zink oder eine Legierung, die mindestens eines dieser Metalle umfasst, handelt, und einer Kautschukzusammensetzung auf Basis mindestens eines Elastomers, eines verstärkenden Füllstoffs, eines Vernetzungssystems und mindestens einer Polyphenolverbindung, wobei die Polyphenolverbindung mindestens drei aromatische Ringe mit 6 Kohlenstoffatomen, die jeweils mindestens zwei vicinale Hydroxylgruppen tragen, umfasst, wobei die Polyphenolverbindung aus Gallotanninen ausgewählt ist.

2. Verbundwerkstoff nach dem vorhergehenden Anspruch, wobei die Polyphenolverbindung aus Estern der Gallussäure und eines aus Pentosen und Hexosen ausgewählten Polyols ausgewählt ist.

3. Verbundwerkstoff nach einem der vorhergehenden Ansprüche, wobei die Polyphenolverbindung aus Estern von Glucose und Gallussäure ausgewählt ist und vorzugsweise aus Polygalloylglucosen mit 3 bis 10 und vorzugsweise 5 bis 10 Galloyleinheiten ausgewählt ist.

4. Verbundwerkstoff nach einem der vorhergehenden Ansprüche, wobei der Gehalt an Polyphenolverbindung in der Kautschukzusammensetzung zwischen 0,1 und 30 phe liegt.

5. Verbundwerkstoff nach einem der vorhergehenden Ansprüche, wobei die Zusammensetzung frei von Cobaltsalzen ist oder weniger als 1 phe davon enthält.

6. Verbundwerkstoff nach einem der vorhergehenden Ansprüche, die mindestens ein Elastomer umfasst, das aus Dienelastomeren, Olefinelastomeren, thermoplastischen Elastomeren und Mischungen davon ausgewählt ist.

7. Verbundwerkstoff nach einem der vorhergehenden Ansprüche, wobei die Zusammensetzung frei von molekularem Schwefel ist oder weniger als 1 phe davon umfasst.

8. Verbundwerkstoff nach einem der vorhergehenden Ansprüche, wobei die Zusammensetzung frei von Zink oder Zinkoxid ist oder weniger als 1 phe, bevorzugt weniger als 0,5 phe, weiter bevorzugt weniger als 0,2 phe, davon umfasst.

9. Verbundwerkstoff nach einem der vorhergehenden Ansprüche, wobei in der Kautschukzusammensetzung der verstärkende Füllstoff Ruß, Kieselsäure oder eine Mischung von Ruß und Kieselsäure umfasst.

10. Reifen, umfassend einen Verbundwerkstoff nach einem der Ansprüche 1 bis 9.

11. Reifen nach Anspruch 10, der eine Innenschicht umfasst, die einen Verbundwerkstoff nach einem der Ansprüche 1 bis 9 umfasst.

## Claims

1. Composite based on at least one reinforcing element comprising a metallic surface, in which the metal of the metallic surface is iron, copper, tin, zinc or an alloy comprising at least one of these metals, and a rubber composition based on at least one elastomer, a reinforcing filler, a crosslinking system and at least one polyphenolic compound, the polyphenolic compound comprising at least three aromatic rings comprising 6 carbon atoms, each bearing at least two vicinal hydroxyl groups, said polyphenolic compound being chosen from gallotannins.

2. Composite according to the preceding claim, in which the polyphenolic compound is chosen from esters of gallic acid and of a polyol chosen from pentoses and hexoses.

3. Composite according to one of the preceding claims, in which the polyphenolic compound is chosen from esters of glucose and of gallic acid, in a preferred way chosen from polygalloyl glucoses comprising from 3 to 10 and preferably from 5 to 10 galloyl units.

4. Composite according to one of the preceding claims, in which the content of polyphenolic compound in the rubber composition is between 0.1 and 30 phr.

5. Composite according to one of the preceding claims, in which the said composition is devoid of cobalt salts or contains less than 1 phr thereof.

6. Composite according to any one of the preceding claims, comprising at least one elastomer chosen from diene, olefin and thermoplastic elastomers and their mixtures.

7. Composite according to one of the preceding claims, the said composition being devoid of molecular sulfur or comprising less than 1 phr thereof.

8. Composite according to any one of the preceding claims, in which the composition is devoid of zinc or of zinc oxide, or else comprising less than 1 phr, preferably less than 0.5 phr, more preferentially less than 0.2 phr, thereof.

9. Composite according to any one of the preceding claims, in which the reinforcing filler comprises carbon black, silica or a mixture of carbon black and of silica.

10. Tyre comprising a composite according to one of Claims 1 to 9.

11. Tyre according to claim 10 comprising an internal layer comprising a composite according to one of Claims 1 to 9.
